# EUROPEAN PATENT SPECIFICATION

(11) **EP 3 578 025 B1**
(45) Date of publication and mention of the grant of the patent: **27.09.2023**
(21) Application number: 19178361.2
(22) Date of filing: 05.06.2019
(51) Int. Cl.: A01B 23/02, A01B 39/18

(54) **WEEDING MACHINE AND WEEDING ELEMENT**
JÄTMASCHINE UND JÄTELEMENT
DÉSHERBEUSE ET ÉLÉMENT-DÉSHERBEUSE

(30) Priority: 06.06.2018 NL 1042892
(43) Date of publication of application: 11.12.2019
(73) Proprietor: Lemken GmbH & Co KG, 46519 Alpen (DE)
(72) Inventor: Geerse, Peter, 4364BJ Grijpskerke (NL)

(56) References cited:
- EP-A1- 1 961 283
- EP-A1- 3 146 819
- WO-A1-2015/009170
- CA-A- 1 047 823
- DE-A1- 1 482 083
- US-A- 3 209 841

## Description

### Territory of the invention

The present invention concerns a weeding machine, self-propelled or driven by an agricultural tractor, for the mechanical control of unwanted vegetation or weeds in open ground, cultivated crops such as vegetables and herbs, grown in rows. More specifically, the invention relates to a weeding machine that is equipped with a weeding element with torsional weed tines.

### Background to the invention

One of the reasons for cultivating crops in rows is to facilitate weed control. Crops grown in rows are characterized by the fact that the distance between successive plants in the row is smaller than the distance between adjacent rows. The relatively dense position in the rows increases the competitiveness of the crop in terms of light and space in relation to weeds. The competitiveness between the rows is correspondingly smaller, but there is a demand for weed control methods that do not or only minimally disturb the cultivated crop.

In non-chemical weed control, the control of weed plants in the row, with minimal disturbance to individual plants of the cultivated crop, is a special task. This is a particular demand in an early growth phase when the plants of the cultivated crop are very sensitive to mechanical damage.

One of the well-known methods for mechanically controlling weeds in rows of cultivated crops is the use of torsion-resistant tines. Torsion resistant tines are made of a longitudinal unit of spring steel with a diameter usually of 8 mm +/- 3 mm. A first end of a torsional tine is used for attachment to the frame or sub-frame of the weeding machine, the second end for superficially stirring the soil to control weeds while the weeding machine is driven by an agricultural tractor, for example. Torsion-resistant tines are available in a wide range of shapes and sizes, see for example the TECparts^{®} catalogue.

In a well-known version, the configuration of the torsional tines on the frame or sub-frame of the weeding machine is characterized by the fact that, in working mode, the torsional tines are located on both sides of the rows of plants to be cultivated in order to allow free passage to the above-ground parts of the cultivated plants. Near the second end, the torsional bows have a side-facing kink so that the second end extends to or beyond the center of the crop row. The part before and after the kink are oriented in a dragging direction in respectively a mainly vertical and horizontal plane, considered in the intended direction of travel in the working mode.

The working principle of the torsional tine in this application is based on the use of a difference in constancy between the cultivated plant and a weed plant. When used as intended, the torsional weed tine does not deviate sideways due to resilient bending when hitting a weed plant, but rather when hitting a cultivated plant. The torsional tine twists during lateral deflection. He owes his name to this characteristic. A tillage implement with a harrow attachment for a tillage implement is disclosed in EP 3146819 A1, wherein a multitude of tines is attached to each of several rank bars.

The resistance of a torsional tine in working mode is mainly determined by the characteristics of the soil and the type and growth stage of the cultivated crop and the occurring weeds. The practical situation is characterized by a large variation of working conditions in terms of type and condition of soil and vegetation.

A disadvantage of known weeding machines, equipped with torsion weeders of the type mentioned above and intended for the application mentioned above, is that there are no or only limited possibilities for adjusting the working intensity and/or that they are laborious.

The aim of the present invention is, among other things, to provide a weeding machine with which the working intensity can be adapted to the circumstances in a user-friendly manner.

### Summary of the invention

According to the invention, a weeder of the type described above is characterized by the fact that it contains at least one weeding element for holding at least two torsional tines, which is equipped for that purpose with two arms which can be rotated independently around one pivot axis or each around an individual pivot axis, and which have arms equipped with fasteners for attaching at least one torsional tine to each arm, the arms being linked together by an adjustable spring element. The advantage of a weeding machine with a weeding element according to these characteristics is that the working intensity of the torsion tines can be adapted to the working conditions in a user-friendly way.

In an inexpensive version, the spring element consists of a tension spring with a chain at least at one end and the arms are each equipped with connectors for the manual coupling and uncoupling of the spring element to the respective arms.

For optimum cooperation between the torsional weed tines on a weeding element, each of the arms has a stop, which together define the minimum angle between the arms.

According to the invention, in order to create additional adaptability to the working conditions, the weeding machine is characterized by the fact that the weeding element comprises a holder and a bracket, the pivot axis being held by the members of the bracket, the bracket being mounted on the holder in a vertical plane perpendicular to the direction of travel R of the weeding machine, and the holder being mounted on the frame of the weeding machine. For the purpose of securing the position of the bracket with respect to the holder in a user-friendly and at the same time easy way, the collaborating holder and bracket are provided with a pin-hole arresting.

The invention also relates to a weeding element for holding at least two torsional tines, to be attached to a weeding machine, where the weeding element is characterized by having two arms independently rotating around one axis or each rotating around an individual axis, which arms are equipped with fasteners for attaching at least one torsional tine to each arm, which arms are interconnected by a spring element with an adjustable spring force.

### Brief description of the drawings

The invention is explained in the following on the basis of three figures. Figure 1 schematically shows a perspective view of a weeding machine according to the invention. Figures 2 and 3 show a schematic perspective and a side view of a weed element according to the invention.

### Exemplary version of a weeding machine and a weeding element according to the invention

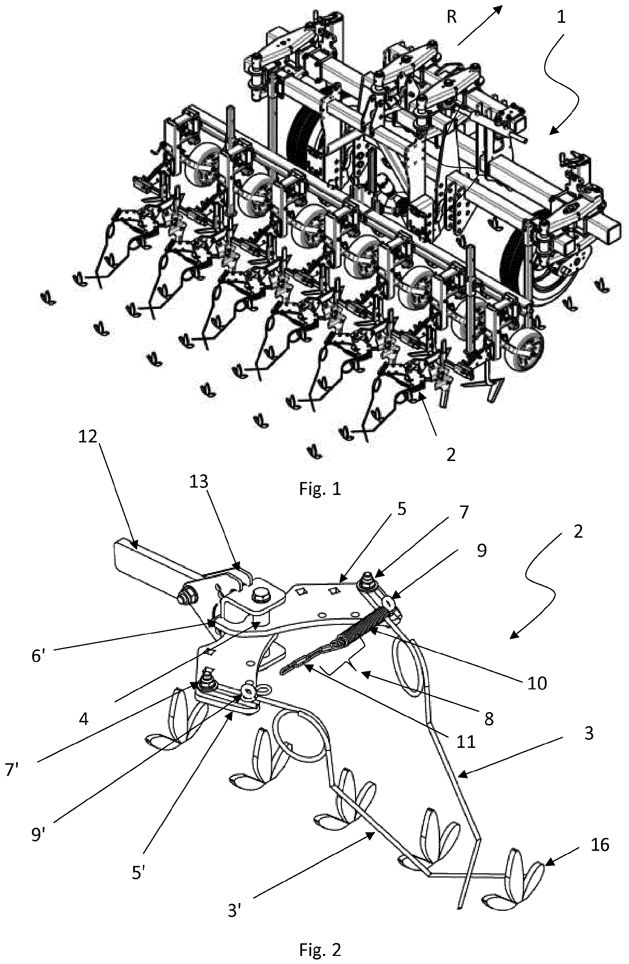

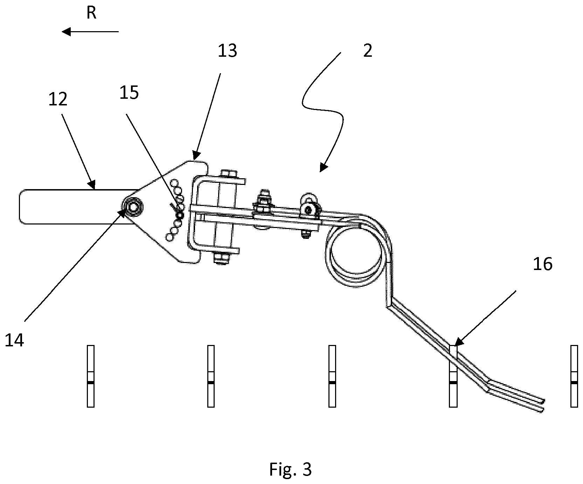

The invention will be explained in more detail below by way of example by means of one execution example shown in the drawing. Figure 1 shows a schematic example of a weeding machine 1 with a multiple of weeding elements 2 according to the present invention. Using figures 2 and 3, the invention is then described in more detail.

Figures 2 and 3 show a weed element 2 with two known torsional weed tines 3, 3'. The torsional weed tines 3, 3' are each, with known attachments 7, 7', mounted on a pivotal axis 4 hinged arm 5 and 5', with both arms 5, 5' together defining an angle. The minimum angle is defined by the stops 6 (not visible) and 6' which limit the rotation of each of the arms 5 and 5'. The ends of the arms 5, 5' are pulled together by a spring element 8. For this purpose, the ends of the arms 5, 5' are equipped with known fasteners 9, 9' to connect the ends of the spring element 8. In the present example, the spring element 8 consists of a tension spring 10 and a chain 11 to adjust the resistance to the divergence of the arms 5, 5' with the torsional tines 3, 3'.

In working mode, i.e. during the weeding of a crop grown in rows, the weed element 2 is located in the middle above a crop row when used for its intended purpose, with weed teeth 3, 3' following a row in a trailing position while moving the weeding machine by, for example, an agricultural tractor. In the situation where the torsion springs 3, 3' do not encounter resistance from a culture plant 16, there is some overlap between the ends of the torsion springs 3, 3'. The degree of overlap is defined by the stops 6, 6' and the shape of the torsional tines 3, 3'. When the torsional tines 3, 3' are deflected by a cultivated plant 16, this results in a force that forces the arms 5, 5' to turn around the axis 4. This force is counteracted by the spring element 8. If the spring force of the spring element 8 is correctly adjusted, the torsion springs will pass around the culture plant 16 without damaging it. After passing the cultivated plant 16, the torsional tines 3, 3' regain their original position in order to cultivate the soil between cultivated plants 16 in order to control weeds. It is clear that, according to the invention, the technique and working method described here results in a significant improvement in the adaptability to the working conditions, which in turn improves the quality of the processing.

According to the invention, an addition to the above adjustment option is offered by the possibility to adjust the drag angle of the torsional bending teeth to the circumstances. This characteristic is illustrated by Figure 3. The weed element 2 has a holder 12 and a bracket 13, where the holder 12 serves to mount the weed element 2 in a familiar way on a weeding machine 1. The bracket13 serves to hold the pivot axis 4. In order to introduce the possibility to adjust the towing angle of the torsional weed tines 3, 3', the bracket13 is hinged around the axis 14 and connected to the holder 12. The pin-hole arrest 15 serves as an example of a method to secure the position of the bracket13 with respect to the holder 12.

The invention relates to a weeding element and to a weeding machine equipped with one or more weeding elements according to the invention. The operation of the weeding element according to the invention and the weeding machine that is equipped with it has been clarified by means of a single design example. The example describes a spring element 8 consisting of a tension spring 10 and a chain 11. It goes without saying that other, similar techniques to adjust and adjust the resistance to twisting of the arms 5, 5' around the pivot axis 4 are within the scope of the invention. This also applies to techniques for centrally controlling the twist resistance setting, e.g. from the tractor cab.

## Claims

1. Weeding machine (1) for weed control in the rows of a crop grown in rows, including known torsional weed tines (3, 3'), the weeding machine (1) contains at least one weed element (2) for holding at least two torsional weed tines (3, 3'), which, for that purpose, has two arms (5, 5') which can be independently rotated around one pivot axis (4), or which arms (5, 5') can be rotated around each a pivot axis (4), the arms (5, 5') having attachments (7, 7') for attaching at least one torsional weed tine (3 or 3') to each arm (5, 5') **characterized in that** the arms (5, 5') are interconnected by an adjustable spring element (8) with an adjustable spring force.

2. Weeding machine (1) according to claim 1, **characterized in that** the spring element (8) consists of a tension spring (10) with a chain (11) at least at one end and that the arms (5, 5') are each provided with coupling devices (9, 9') for the manual coupling and uncoupling of the spring element (8) to the respective arms (5, 5').

3. Weeding machine (1) according to claim 2, **characterized in that** each of the arms (5, 5') has a stop (6 and 6'), which stops (6, 6') together define the minimum angle between the arms (5, 5').

4. Weeding machine (1) according to claim 1, **characterized in that** the weeding element (2) comprises a holder (12) and a bracket (13), the pivot axis (4) being held by the members of the bracket (13), the bracket (13) being mounted in a vertical plane perpendicular to the direction of travel (R) of the weeding machine on the holder (12) and the holder (12) being mounted on the frame of the weeding machine (1).

5. Weeding machine (1) according to claim 4, **characterized in that** the collaborating holder (12) and bracket (13) are provided with a pin-hole arresting (15) for securing the position of the bracket (13) with respect to the holder (12).

6. Weed element (2) for holding at least two torsional weed tines (3, 3'), for attachment to a weed machine (1), **characterized in that** the weed element (2) is equipped with two arms (5, 5') that can be independently pivoted around one pivot axis (4) or each around one pivot axis (4), which arms (5, 5') have attachments (7, 7') for attaching at least one torsional weed tine (3, 3') to each arm (5, 5'), which arms (5, 5') are interconnected by a spring element (8) with an adjustable spring force.

## Patentansprüche

1. Unkrautbekämpfungsmaschine (1) zur Unkrautbekämpfung in den Reihen eines in Reihen angebauten Erntegutes, mit bekannten Torsions-Unkrautzinken (3, 3'), wobei die Unkrautbekämpfungsmaschine (1) mindestens ein Unkrautbekämpfungselement (2) zur Aufnahme von mindestens zwei Torsions-Unkrautzinken (3, 3') enthält, das dazu zwei unabhängig voneinander um eine Schwenkachse (4) oder um jeweils eine Schwenkachse (4) drehbare Arme (5, 5') aufweist, , wobei die Arme (5, 5') Aufnahmen (7, 7') zum Anbringen mindestens eines Torsions-Unkrautzinkens (3 bzw. 3') an jedem Arm (5, 5') aufweisen, **dadurch gekennzeichnet, dass** die Arme (5, 5') durch ein einstellbares Federelement (8) mit einstellbarer Federkraft miteinander verbunden sind.

2. Unkrautbekämpfungsmaschine (1) nach Anspruch 1, **dadurch gekennzeichnet, dass** das Federelement (8) aus einer Zugfeder (10) mit einer Kette (11) an mindestens einem Ende besteht und dass die Arme (5, 5') jeweils mit Kupplungsvorrichtungen (9, 9') zum manuellen An- und Abkuppeln des Federelements (8) an den jeweiligen Armen (5, 5') versehen sind.

3. Unkrautbekämpfungsmaschine (1) nach Anspruch 2, **dadurch gekennzeichnet, dass** jeder der Arme (5, 5') einen Anschlag (6 und 6') aufweist, wobei die Anschläge (6, 6') zusammen den Mindestwinkel zwischen den Armen (5, 5') definieren.

4. Unkrautbekämpfungsmaschine (1) nach Anspruch 1, **dadurch gekennzeichnet, dass** das Unkrautbekämpfungselement (2) einen Halter (12) und einen Ausleger (13) umfasst, wobei die Schwenkachse (4) von den Gliedern des Auslegers (13) gehalten wird, der Ausleger (13) in einer vertikalen Ebene senkrecht zur Fahrtrichtung (R) der Unkrautbekämpfungsmaschine am Halter (12) montiert ist und der Halter (12) am Rahmen der Unkrautbekämpfungsmaschine (1) montiert ist.

5. Unkrautbekämpfungsmaschine (1) nach Anspruch 4, **dadurch gekennzeichnet, dass** der zusammenwirkende Halter (12) und der Bügel (13) mit einer Stiftlocharretierung (15) zur Sicherung der Position des Bügels (13) in Bezug auf den Halter (12) versehen sind.

6. Unkrautbekämpfungselement (2) zur Aufnahme von mindestens zwei Torsions-Unkrautzinken (3, 3'), zur Befestigung an einer Unkrautbekämpfungsmaschine (1), **dadurch gekennzeichnet, dass** das Unkrautbekämpfungselement (2) mit zwei unabhängig voneinander um eine Schwenkachse (4) oder um jeweils eine Schwenkachse (4) schwenkbaren Armen (5, 5') ausgestattet ist, welche Arme (5, 5') Anbauten (7, 7') zur Befestigung mindestens eines verdrehbaren Unkrautzinkens (3, 3') an jedem Arm (5, 5') aufweisen, welche Arme (5, 5') durch ein Federelement (8) mit einstellbarer Federkraft miteinander verbunden sind.

## Revendications

1. Machine de désherbage (1) pour le contrôle des mauvaises herbes dans les rangs d'une culture en rangs, comprenant des dents de désherbage torsionnelles connues (3, 3'), la machine de désherbage (1) contient au moins un élément de désherbage (2) pour maintenir au moins deux dents de désherbage torsionnelles (3, 3'), qui, à cette fin, a deux bras (5, 5') qui peuvent être tournés indépendamment autour d'un axe de pivotement (4), ou dont les bras (5, 5') peuvent être tournés autour chaque d'un axe de pivotement (4), les bras (5, 5') ayant des attaches (7, 7') pour attacher au moins une dent de désherbage torsionnelle (3 ou 3') à chaque bras (5, 5') **caractérisé en ce que** les bras (5, 5') sont interconnectés par un élément de ressort réglable (8) avec une force de ressort réglable.

2. Machine de désherbage (1) selon la revendication 1, **caractérisé en ce que** l'élément ressort (8) consiste en un ressort de traction (10) avec une chaîne (11) à au moins une extrémité et **en ce que** les bras (5, 5') sont chacun pourvus de dispositifs d'accouplement (9, 9') pour l'accouplement et le désaccouplement manuels de l'élément ressort (8) aux bras respectifs (5, 5').

3. Machine de désherbage (1) selon la revendication 2, **caractérisé en ce que** chacun des bras (5, 5') comporte une butée (6 et 6'), ces butées (6, 6') définissant ensemble l'angle minimal entre les bras (5, 5').

4. Machine de désherbage (1) selon la revendication 1, **caractérisée en ce que** l'élément de désherbage (2) comprend un support (12) et une équerre (13), l'axe de pivotement (4) étant maintenu par les éléments de l'équerre (13), l'équerre (13) étant montée dans un plan vertical perpendiculaire à la direction de déplacement (R) de la machine de désherbage sur le support (12) et le support (12) étant monté sur le châssis de la machine de désherbage (1).

5. Machine de désherbage (1) selon la revendication 4, **caractérisée en ce que** le support collaborant (12) et l'étrier (13) sont pourvus d'un dispositif d'arrêt (15) pour sécuriser la position de l'étrier (13) par rapport au support (12).

6. Elément de désherbage (2) pour maintenir au moins deux dents de désherbage (3, 3') en torsion, à fixer à une machine de désherbage (1), **caractérisé en ce que** l'élément de désherbage (2) est équipé de deux bras (5, 5') qui peuvent être pivotés indépendamment autour d'un axe de pivotement (4) ou chacun autour d'un axe de pivotement (4), ces bras (5, 5') ont des attaches (7, 7') pour attacher au moins une dent de désherbage torsionnelle (3, 3') à chaque bras (5, 5'), ces bras (5, 5') sont interconnectés par un élément de ressort (8) avec une force de ressort réglable.
